# EUROPEAN PATENT SPECIFICATION

(11) **EP 0 891 473 B1**
(45) Date of publication and mention of the grant of the patent: **13.03.2002**
(21) Application number: 97917660.9
(22) Date of filing: 27.03.1997
(51) Int. Cl.: F01N 3/20, F01N 3/36, B01D 53/94

(54) **AMMONIA INJECTION IN NOx CONTROL**
AMMONIAK-EINSPRITZUNG ZUR REDUKTION DER NOx-EMMISSION
INJECTION D'AMMONIAC POUR LA REDUCTION DES EMISSIONS DE NOx

(30) Priority: 02.04.1996 US 14660 P; 18.06.1996 US 20007 P
(43) Date of publication of application: 20.01.1999
(73) Proprietor: Kleenair Systems, Inc., Irvine, CA 92612 (US)
(72) Inventor: BERRIMAN, Lester, P., Irvine, CA 92612 (US); ZABSKY, John, M., Santa Ana, CA 92707 (US); WARD, William, H., Costa Mesa, CA 92626 (US)
(74) Representative: Hackney, Nigel John
(86) International application number: US9705012
(87) International publication number: WO9739226

(56) References cited:
- EP-A- 0 381 236
- US-A- 4 403 473
- US-A- 5 369 956
- US-A- 5 410 873

## Description

### CROSS-REFERENCE TO RELATED CASES

This application claims the benefit of U.S. Provisional Applications numbers 60/014,660 filed April 12, 1996 and 60/020,007 filed June 18, 1996.

### BACKGROUND OF THE INVENTION

In our earlier patent 5,224,346, we describe experiments which show that the amount of nitrogen oxides (NO and NO₂), or NOx in engine exhaust gases can be reduced by injecting ammonia (NH₃), which reacts with nitrogen oxides to produce nitrogen and water. As described in that patent, it is desirable to control the amount of ammonia injected so it is generally proportional to the production of NOx. Ammonia injection generally is not required when a warmed-up engine is idling or the like, when the relatively small amount of NOx can be eliminated by the hot catalytic converter. At other times, the amount of NOx produced, and consequently the amount of ammonia to be injected, is indicated by the amplitude of many phenomena. These include the exhaust temperature, the air inlet manifold pressure, and the flow rate of fuel or air into the engine. Special sensors could be installed in an engine and connected to control circuitry that controls ammonia injection, but the installation of such sensors increases the cost for an ammonia injection system. A control for an ammonia injection system which avoided the need for installation of a special sensor, would greatly reduce the cost of an ammonia injection system.

In the above-mentioned patent 5,224,346, applicant described the injection of ammonia through a small tube having an opening pointed downstream along the exhaust gas flow. Although such injector tube lay near the upper end of the exhaust gas conduit where exhaust gases are very hot, the exhaust gases cool quickly and the ammonia was not rapidly mixed with the exhaust gases. As a result, a large part of the ammonia did not effectively combine with nitrogen oxides in the exhaust gases. An ammonia injection system which increased the amount of ammonia that reacted with nitrogen oxides in the exhaust gases, would reduce the amount of ammonia required and decrease the amount of nitrogen oxides emitted into the atmosphere.

### SUMMARY OF THE INVENTION

In accordance with one embodiment of the present invention, a system is provided for injecting ammonia into the exhaust gases of an engine, which increases the amount of ammonia that combines with nitrogen oxides in the exhaust gases, in a low cost system. Instead of injecting ammonia through a single hole into the exhaust gas stream, applicant injects the ammonia through a plurality of spaced holes lying in the stream. Also, applicant can mix the exhaust gases as by providing a mixer section of the exhaust gas conduit that includes mixing blades.

Reactions of the ammonia with nitrogen oxides in the exhaust gases is greatly enhanced by activating the ammonia prior to injecting it into the stream of exhaust gases. The activation of the ammonia (NH₃) first splits it into NH₂ + H, with NH₂ being very reactive. The NH₂ can further decompose into NH + H, with NH also being very reactive. The activation of ammonia immediately prior to its injection, results in the very reactive components being present at an upstream location along the flow of exhaust gases where the exhaust gases are very hot, to enhance chemical reactions. The activation of ammonia can be accomplished by heating it, especially in the presence of certain catalyzing materials that include metals of the platinum group, iron, nickel, and zinc, which enhance the reaction. One approach is to place a body packed with particles of the catalyzing material, in the stream of exhaust gases so the body is heated to a high temperature. Ammonia must pass through long narrow passages in moving through the body to outlet holes in the body, so the ammonia is heated and thereby activated as it moves through the body.

A control that adjusts the flow of ammonia to increase or decrease it as the amount of nitrogen oxides in the exhaust gases respectively increase and decrease, does not require a specially installed sensor, Instead, applicant uses the electrical signals delivered to an injection valve of the engine, that injects fuel into air to burn therewith, as a sensor output that controls the flow rate of ammonia into the exhaust gas stream.

The novel features of the invention are set forth with particularity in the appended claims. The invention will be best understood from the following description when read in conjunction with the accompanying drawings.

### BRIEF DESCRIPTION OF THE DRAWINGS

Fig. 1 is a simplified schematic view of an engine, with pollution reduction apparatus of the present invention installed therein.
Fig. 2 is a schematic diagram of a portion of the engine and pollution reduction apparatus of Fig. 1.
Fig. 3 is a partial sectional isometric view of the injector and a portion of the exhaust pipe of Fig. 2.
Fig. 4 includes a first graph showing variation in speed of an engine and a second graph showing the level of nitrogen oxides produced by the engine at the different speeds, when ammonia was injected through a single port into the exhaust pipe.
Fig. 5 contains a first graph showing variation in engine speed which is the same as in Fig. 4, and containing a second graph showing variation in the generation of nitrogen oxides when ammonia was injected into the same location of the exhaust pipe, but through the injector of Fig. 3.
Fig. 6 includes a first graph showing variation in engine speed which is the same as in Figs. 4 and 5, and a second graph showing variation in generation of nitrogen oxides, using the same injector as for Fig. 5 but with the amount of injected ammonia reduced by 25%.
Fig. 7 is an isometric view of a mixer section that can be installed in the exhaust pipe of Fig. 3.
Fig. 8 is a partial sectional view of an injector of another embodiment of the invention, which is constructed to activate ammonia prior to injecting it into the exhaust gas stream.
Fig. 9 is a partial sectional view of an injector of still another embodiment of the invention, which activates ammonia prior to its injection.
Fig. 10 is a partial sectional view of an injector of yet another embodiment of the invention, which activates ammonia prior to its injection.
Fig. 11 is a simplified schematic diagram of an electronic circuit of the system of Fig. 2.
Fig. 12 illustrates an ammonia injection system of another embodiment of the invention.

### DESCRIPTION OF THE PREFERRED EMBODIMENTS

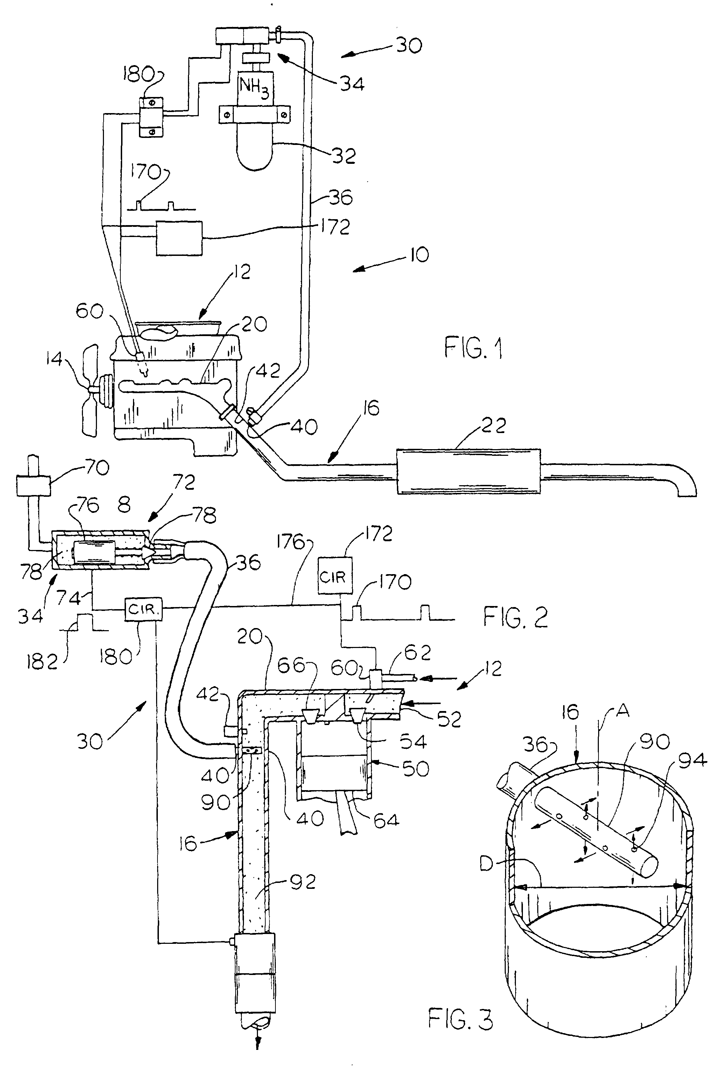

Fig. 1 illustrates a system 10 of the present invention, wherein an engine 12 has cylinders in which fuel and air are combusted to turn a crank shaft 14. The combustion produces hot exhaust gases that are passed through an exhaust conduit 16 into the atmosphere. The exhaust conduit includes a manifold 20 that is connected to a few cylinders to collect the exhaust gases therefrom; a catalytic converter 22 that lies along the exhaust conduit, is widely used in vehicle engines to reduce pollution.

Fig. 1 shows an ammonia injection system 30 that includes a container 32 of ammonia, such as a pressure vessel containing liquid ammonia at a pressure of about 150 psi. The container or source 32 delivers ammonia through a metering valve apparatus 34 and through a hose 36 to an ammonia injection location 40 that is positioned along the exhaust pipe or conduit 16. The location 40 where ammonia is injected into the exhaust pipe, is in or close to the exhaust manifold 20, so the ammonia encounters very hot exhaust gases (usually over 1100°F at high engine loads) to promote the reaction of ammonia and the exhaust gases to reduce nitrogen oxides. When the catalytic converter 22 is heated, after a few minutes of engine operation, its noble metal catalyst will further react ammonia with nitrogen oxides (even though the temperature of the exhaust gases is much lower at the catalytic converter than near the exhaust manifold). Although applicants wish to inject the ammonia where the exhaust gases are hottest (but not near an open flame) applicants have placed the injection location 40 slightly downstream of a location 42 where an engine oxygen sensor is typically located in modern engines, so the injection of ammonia will not interfere with accurate oxygen sensing.

Fig. 2 shows some details of the engine 12 and of the ammonia injection system 30. An engine cylinder 50 receives air through an air manifold 52 and an inlet valve 54. A fuel injector 60 receives fuel from a fuel line 62 and injects the fuel through the inlet valve 54 into the cylinder, where a spark plug or the like ignites the fuel-air mixture to drive a piston 64 that is connected to the crankshaft. Exhaust gases created in the cylinder are exhausted through an exhaust valve 66, and to the exhaust manifold 20 which is part of the exhaust conduit 16, and eventually into the environment.

The metering valve apparatus 34 of the ammonia injection system includes a pressure regulator 70 that supplies pressured gaseous ammonia to a solenoid valve 72. Electrical pulses delivered over a line 74 to the solenoid valve, energize a solenoid 76 to retract a valve member 78. This allows gaseous ammonia 78 lying in a chamber or conduit 80 to flow through the hose 36 to an injector 90 at location 40. The injector 90 injects the ammonia, or components of it, into the stream of exhaust gas 92, preferably at the location slightly downstream of the air sensor at 42.

Fig. 3 illustrates a diffuser ammonia injector 90 that applicant has constructed and successfully tested. The injector 90 is a tube having a diameter of 6 mm and a length of 50 mm and projecting into an exhaust conduit of a diameter D of about 60 mm. Applicant drilled eight holes 94 into the tube, with two holes each facing upstream, downstream, and in opposite sideward directions. The hose 36 carrying pressured (such as up to 10 psi, or 70 kPa) ammonia was attached to the tube as shown. Applicant found that there was a significant reduction in nitrogen oxides in the exhaust gases, as a result of the use of the diffuser construction of the injector 90, in the place of a single port opening into the exhaust pipe. Applicant believes that this reduction was due to the mixing of the ammonia with the exhaust gases as quickly as possible, while the exhaust gases are still very hot. It is preferred that the injector or injectors have holes 94 on primarily opposite sides of the exhaust conduit axis A.

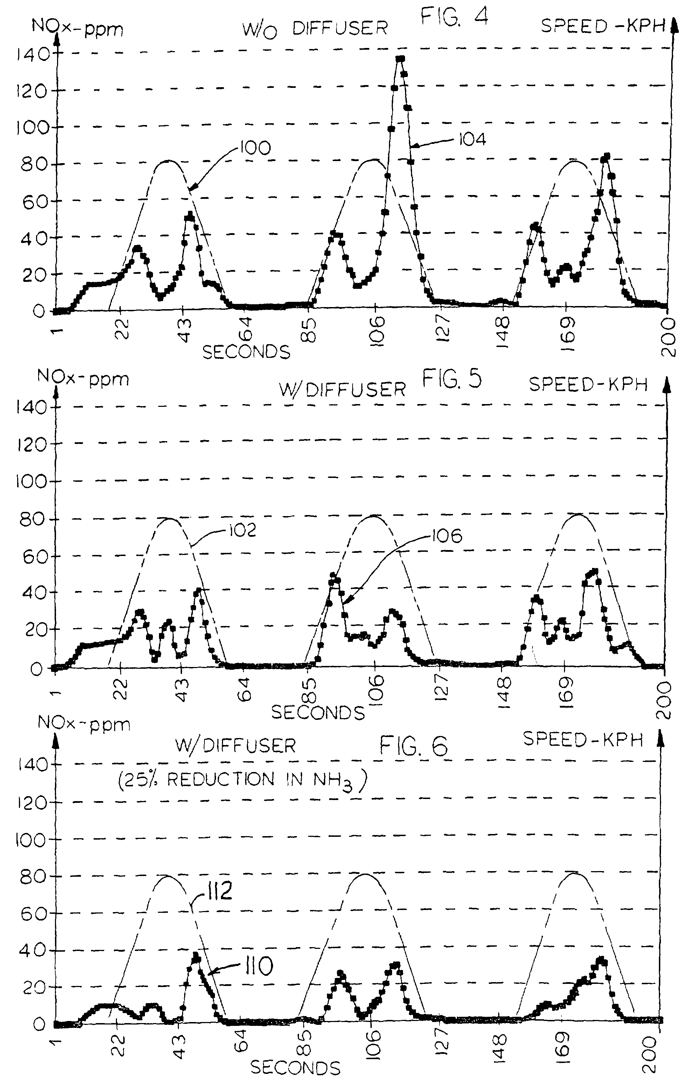

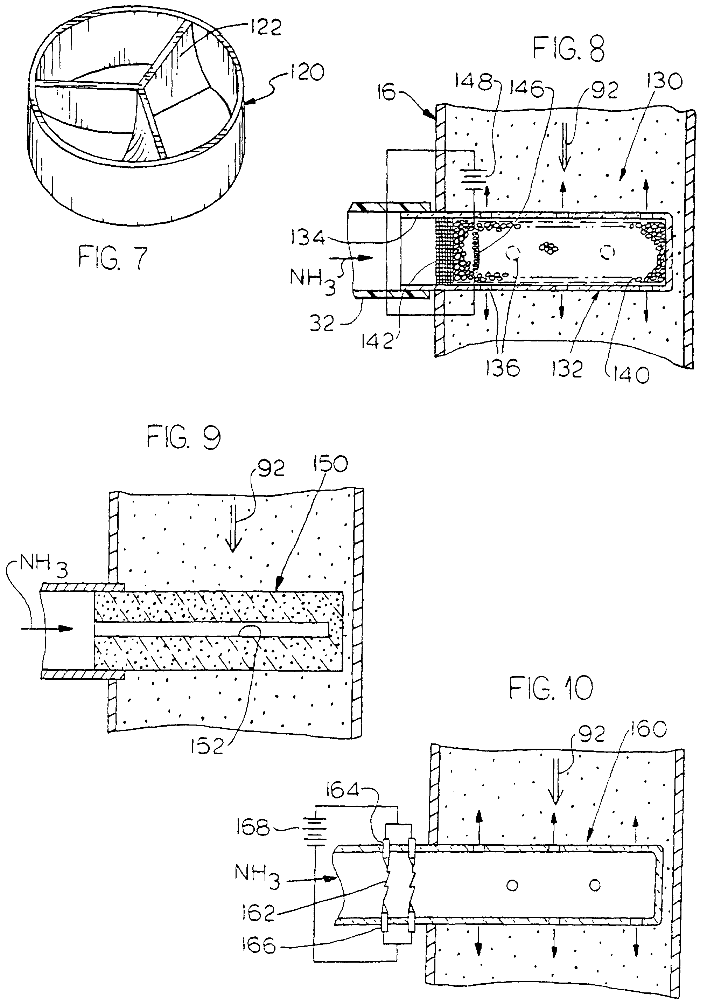

Figs. 4 and 5 include graphs showing variation in the levels of nitrogen oxides in the exhaust gas of an engine of an automobile (1991 Chevrolet) containing an engine (8-cylinder 305 cubic inch displacement) when the automobile was driven at a speed cycle similar to that of a standard federal driving cycle. The speed of the engine in kilometers per hour is indicated at the right vertical axis of the graph, while the time during the test is given in seconds along the horizontal axis of the graphs. The emission of nitrogen oxide in ppm (parts per million) is indicated along the left vertical axis of each graph. First lines 100, 102 in Figs. 4 and 5 indicate variation in speed of the vehicle with time, showing that the vehicle was repeatedly accelerated from 0 to 80 kph (50 miles per hour) and then decelerated to zero, during periods of about 44 seconds each, with the engine idling between these periods. Graphs 104 and 106 show the variation in emissions of nitrogen oxides. The rate of ammonia injection (0.51 liter per minute of ammonia at atmospheric pressure at a constant speed of 10 mph, with the rate proportional to fuel flow) in Figs. 4 and 5 were substantially the same (per unit fuel) during each test. The difference between Figs. 4 and 5, is that in Fig. 4 ammonia was injected through a single port directed downstream (as shown in U.S. Patent 5,224,346), while in Fig. 5 ammonia was injected through a diffuser injector of the construction shown at 90 in Fig. 3. It can be seen in Fig. 5, that the amount of resulting nitrogen oxides produced when the diffuser injector of Fig. 3 was used, was significantly lower than the amount of nitrogen oxides produced in Fig. 4.

Fig. 6 contains a graph 110 showing variation in nitrogen oxides during the same type of vehicle operating cycles shown in Figs. 4 and 5 (speed indicated by graph 112), and using the same injector as for Fig. 5, except that in Fig. 6 the amount of injected ammonia was reduced by 25%. This indicates that there should be close control of the amount of ammonia, so that there is neither too little nor too much. When no ammonia was injected, the amount of nitrogen oxides was about twice as great as the amount shown in Fig. 4.

Fig. 7 shows a mixer section 120 that can be installed in the exhaust pipe (either slightly upstream or downstream of the injector) to cause a swirling of the exhaust gases near the injection location. Such swirling helps to rapidly distribute injected ammonia throughout the exhaust gas while it is still hot. The particular mixer section 120 includes stationary mixing blades 122 which direct the gas into a swirl. The length of the mixer section 122 can be minimal, so the injector lies close to the exhaust manifold. A variety of mixers can be used, including those with a rotating fan blade and those where turbulence is created immediately downstream of the injector. In all of these, care must be taken to not significantly block the outflow of exhaust gases.

It has been known that in order for ammonia to react with nitrogen oxides, the ammonia must first start to decompose. Ammonia (NH₃) first splits into NH₂ + H. The NH₂ is a very reactive form which can readily react with nitrogen oxides. The NH₂ can further decompose into NH + H with NH also being reactive. The decomposition of ammonia into NH₂ and/or NH, + H, begins (in the absence of a catalyst) at temperatures in the range of 900 to 1000 degrees F, and is essentially complete at 1800°F. In the presence of a catalyst of the type (platinum group) found in modern automobiles, the decomposition occurs at lower temperatures, usually starting at about 500°F and being essentially complete at 1100°F. It is also known that the decomposition of NH₃ tends to occur in the presence of certain materials in addition to metals of the platinum group, including iron, nickel, and zinc. When ammonia is split into the components NH₂ and/or NH, +H, these components combine back into ammonia when the decomposing environment is no longer present.

In accordance with another aspect of the invention applicant decomposes, or activates, ammonia (NH₃) to convert a substantial portion of it (at least 10% and preferably at least 20%) into its active components NH₂ and/or NH shortly before or during injection of ammonia into the stream of engine exhaust gases. By activating ammonia shortly before or during injection, applicant injects highly reactive ammonia components (NH₂ and/or NH) directly into the stream of engine exhaust gas. Since the temperature of the exhaust gas quickly decreases as it rapidly moves from a location where fuel is burned (usually in cylinders) to the opposite end of the exhaust pipe that opens to the environment, it is desirable that the reaction components be present as far upstream as possible (but not where there is an open flame). The above approach avoids wasting a considerable portion of injected ammonia that previously might not break down into its reactive components, or that might break down later. Components that break down later (perhaps a second after injection) when they have traveled a considerable distance along the exhaust pipe, results in reactive components available only at lower temperatures so less of them react with nitrogen oxides in the exhaust gas. Applicant's description of "injecting ammonia" includes injecting ammonia that has not decomposed as well as ammonia that has decomposed.

Fig. 8 shows one example of an ammonia injector 130 which is constructed to activate ammonia immediately prior to or during injection. The injector 130 includes a housing 132 with an inlet 134, and with an outlet formed by six holes 136 lying in the exhaust conduit 16. Numerous particles 140 of a catalytic material (which is catalytic to NH₃) such as a metal of the platinum group, iron, nickel, or zinc are held in the housing, with a screen 142 being used to prevent their loss. Pumped in ammonia passes between the granules prior to exiting through the holes 136. The granules activate the ammonia (NH₃) by splitting some of it into its reactive components prior to exit of the gas into the exhaust gas stream 92. Activation is enhanced by the fact that the granules 140 are heated to a high temperature by the exhaust gases passing over the injector. For a short period after engine startup, the granules can be heated by a heater element 146 connected to a current source 148. The ammonia itself can be preheated prior to reaching the injector.

The housing 132 of the injector 130 of Fig. 8, is somewhat similar to the injector 90 of Fig. 3, in that it includes a plurality of holes 136 (6 being indicated) to distribute the ammonia throughout the exhaust gases. Applicant prefers to use granules of a small size, such as of a diameter of no more than about 2 mm, and preferably much less. This results in narrow passages between adjacent granules, with the narrow passages having an average cross-section of no more than about one square millimeter, and preferably no more than 0.1 mm². In passing between the inlet 134 and one of the outlet holes 136, the ammonia moves along a hot passage (spaces between granules) having a length more than ten times its average width (preferably more than 50 times its width), resulting in considerable heating of the ammonia which results in activating it. The narrow and long passages also aid in bringing the ammonia into contact with the catalytic material of the granules, to help activate it, in addition to heating the ammonia (preferably to at least 500°F or 260°C).

Fig. 9 illustrates another injector 150 which is similar to that of Fig. 8, except that the injector of Fig. 9 is formed of sintered particles of a catalytic material, with the ammonia exiting through pores in the sintered injector into the gas stream 92. A passage 152 has been formed in the center of the injector to more evenly distribute the ammonia.

Fig. 10 illustrates another injector 160 wherein arcs at 162 are created to activate ammonia. The injector includes electrodes 164, 166 and a high voltage (e.g. 20 kilovolts) source 168 connected between the electrodes to produce activating arcs through which the ammonia passes. Any input of energy to ammonia, such as from a laser beam, electron beam, etc. immediately prior to ammonia injection (preferably less than a minute and more preferably less than ten seconds, and while the ammonia is moving toward or through the injector), can help to activate the ammonia.

Referring back to Fig. 2, it can be seen that the fuel injector 60 which injects fuel into the cylinder 50, is energized by electrical pulses 170 received from a circuit 172. The width of each pulse determines how long the valve is open during each cycle, to thereby determine how much fuel is delivered to the cylinder of the engine. A wire 176 (actually at least two wires are required) carries the same output pulses 170 that are delivered to the fuel injector, to a circuit 180 that controls operation of the solenoid valve 72 that meters the flow of ammonia to an ammonia injector such as 90. Gaseous ammonia is supplied to the valve member 78 at a valve conduit 80 where gaseous ammonia is at a predetermined pressure that is usually 10 psi or less (e.g. 2 to 5 psi, depending on the particular engine) as regulated by the pressure regulator 70. Every time a pulse 182 is delivered by circuit 180 to the solenoid 76, the solenoid pulls the valve member 78 to open it for a short time, to deliver ammonia to the hose 36 that carries it to the injector. The width of the pulse 182 determines how long the valve member 78 will lie in its open position, and therefore determines the amount of ammonia that will be dispensed. It is noted that ammonia flow from the hose 36 and through the injector 90 into the exhaust pipe or conduit 16 is substantially continuous and without pulses.

In one example, an automobile is moving at 40 mph, with its engine rotating at 1800 rpm or 30 rps (revolutions per second). The circuit 172 that delivers electrical pulses to the fuel injectors, delivers 15 pulses per second to each of 8 cylinders. Applicant takes the electrical output on one of the eight lines, which carries 15 pulses per second, or one pulse every 67 ms (milliseconds). The circuit 180 can merely amplify these pulses, but preferably divides them so as to produce less frequent pulses on line 74, such as one pulse every 670 ms.

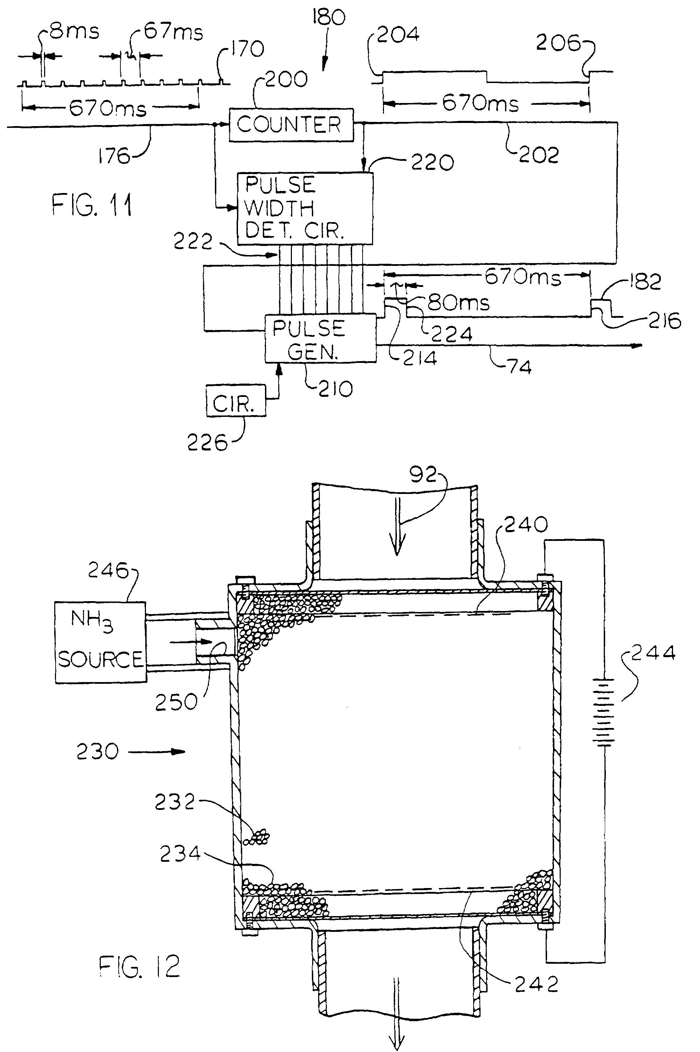

Fig. 11 provides an example of the circuit 180, which receives pulses 170 every one-fifteenth second, or every 67 ms on line 176. In a particular example, it is assumed that each pulse to the fuel injector has a duration of 8 ms to produce a predetermined fuel flow and power output. The fuel injecting pulses on line 176 are delivered to a counter 200, which applicant assumes to count by ten to aid in the illustration. The counter output on line 202 has positive going edges at 204, 206 that are spaced apart by 670 milliseconds, or ten times the spacing of the original pulses. The output on line 202 is delivered to a pulse generator 210 which delivers pulses on line 74, with their leading edges 214, 216 being spaced apart by 670 milliseconds. The duration of each pulse is determined by a pulse width detector circuit 220 which detects the duration (e.g. 8 ms) of each fuel injection pulse 170 on line 176, and whose output 222 is a count indicating the duration of the desired pulse. The output 222 is delivered to the pulse generator 210, to determine the duration of each pulse, with the particular pulse output 224 having a duration of 80 rns. Thus, the duration of fuel injection signals, or the proportion of the time they exist (e.g. 8 ms every 67 ms, or 12% of the time), is used to control the flow rate of ammonia into the exhaust conduit.

Although the fuel injector system 30 (Fig. 2) of the engine must react very rapidly, the provision of a divider circuit 180 enables the use of a solenoid valve which has a much slower reaction time, and which is therefore of lower cost. The fact that applicant uses already-available electrical signals that indicate the amount of NOx production, avoids the need for providing and installing a sensor (and sealing the hole through which the sensor is installed). The electronics for amplifying the fuel injector pulses and dividing them, is of relatively low cost, compared to the cost of providing a separate sensor along the air manifold, fuel line, or exhaust manifold, installing the sensor, and providing a circuit to process the signals. It should be noted that an additional circuit 226 (Fig. 11) is provided to control the pulse generator so no pulses are delivered during idling of a hot engine and to otherwise vary the ammonia flow in accordance with engine operation. However, the flow rate of ammonia is generally increased and decreased as the duration of fuel valve pulses respectively increases and decreases.

Fig. 12 illustrates a system 230 that is based on a system described in U.K. patent application 2,274,412A. That patent application describes a bed 232 of pellets 234 that have a high dielectric constant and ferro-electric properties, such as barium titanate. A pair of metal grids 240, 242 lie at opposite ends of the bed and are connected to a high voltage source (e.g. 20 kilovolts) 244. The bed helps to reduce nitrogen oxides (even in the absence of ammonia), as well as oxidizing soot particles. It is noted that the exhaust gas stream 92 passes through the bed 232, rather than merely passing by (i.e. near) the bed.

In accordance with one aspect of the present invention, applicant connects an ammonia source 246 (including a tank, metering valve, and control) to an inlet 250 near the upstream end of the bed 234. The presence of barium titanate particles and the ionizing energy from the high voltage source 244, promotes the activation of ammonia, with the bed also helping to mix the ammonia into the exhaust gases. The combination of the bed 232 with the high voltage source 244 connected thereto, which is described in the above U.K. patent application, with applicant's ammonia injection, results in a great reduction NOx, while also reducing soot.

Thus, the invention provides a system for injecting ammonia or its components into a stream of exhaust gases from an engine, which effectively uses the ammonia to reduce nitrogen oxide emissions. The ammonia is injected into the exhaust gas conduit at several spaced locations to help distribute the ammonia throughout the exhaust gases while they are still very hot. The ammonia is activated, so at least ten percent of the ammonia is split into NH₂ and/or NH so these highly reactive components are injected into the exhaust gas stream to begin reactions while the exhaust gas is very hot. The ammonia can be broken down by heating it, especially by passing the ammonia through long narrow passages whose walls are forrned of a catalyzing material such as a metal of the platinum group, iron, nickel, or zinc. The injector with holes through which ammonia is injected into the exhaust gas stream, preferably includes a body lying within the exhaust gas stream to be heated to a high temperature (at least 500°F) thereat, to heat ammonia passing therethrough. Control of the amount of ammonia so it is roughly proportional to the amount of nitrogen oxides created, is simplified by using the duration of signals delivered to fuel injectors of the engine to control ammonia flow.

## Claims

1. An apparatus for receiving ammonia (78) and injecting at least components of it into a stream of exhaust gases (92) of an engine (12) the improvement, comprising:
means for activating said ammonia (130, 150, 164, 166, 232) to decompose at least part of it into ammonia components prior to injecting said activated ammonia into said stream of exhaust gases.

2. The apparatus according to claim 1 wherein:
said means for activating is constructed to decompose at least 10% of the ammonia into its components prior to injection of the ammonia and its components into the stream of exhaust gasses.

3. The apparatus according to claim 1 wherein:
said means for activating includes a tube with a portion lying in said stream of exhaust gases and a body (140, 150) comprising material that is catalysing to ammonia to decompose ammonia, said body lying in said tube portion, with said body having multiple ammonia passages connected in parallel.

4. The apparatus according to claim 1 wherein:
said means for activating comprising a body (140, 150) having multiple ammonia-carrying passages that each has a cross-section of less than 1 mm², and an electrically powered heater (146) coupled to said body to heat it.

5. The apparatus according to in claim 1 wherein:
said means for activating comprises a body (150) of sintered particles forming microscopic passages, with said body being positioned to be heated by said exhaust gases.

6. An engine (12) which includes means (50, 64) for combusting hydrocarbons in air to produce work wherein said means also produces a stream of exhaust gases (92) that contain nitrogen oxides, with the engine having an exhaust conduit (16) through which the exhaust gases are passed before being emitted into the atmosphere, the improvement comprising:
a source (32, 246) of ammonia;
an injector apparatus (30, 230) coupled to said source to receive ammonia therefrom and inject it into said exhaust gas conduit;
said injector apparatus including an ammonia-carrying conduit (36) with an injector (90, 130, 150, 160, 250) lying within said exhaust conduit, said injector having at least one exit opening (94, 136) through which said ammonia is injected into said stream of exhaust gases; means for heating said ammonia (130, 150) and flowing it past a catalysing material (140) to activate the ammonia to decompose at least part of into ammonia components after it has left said source and before it has been injected into said exhaust conduit.

7. The engine described in claim 6 wherein:
said means for heating includes a body (140, 150) having a multiplicity of passage portions, that lie within said exhaust conduit and that each has a thickness of no more than 1 mm and a length of more than ten times its average thickness, so said body is heated by exhaust gases and in turn heats ammonia moving through said passage portions to activate said ammonia.

8. The engine described in claim 6 wherein said means for combusting includes a fuel injector valve (60) and an injector (130,150,160) positioned to inject said hydrocarbons into said air to create a fuel-air mixture for combusting, and an electronic fuel-injector circuit (17) that generates electrical currents (170) whose time durations at least partially determine the average flow rate of fuel that is injected into said air, the improvement comprising:
ammonia injection apparatus (30) that includes said injector and a control (180) that is coupled to electronic fuel injector circuit and to said valve and that controls operation of said valve to respectively increase and decrease the flow rate of ammonia injected by said injector into said exhaust conduit as the average time durations of said electrical currents increase and decrease.

9. The engine described in claim 6 wherein:
said injector comprises a body (150) of sintered particles forming microscopic passages.

10. A method for reducing nitrogen oxides in the exhaust gases of an engine that combusts hydrocarbon in the presence of air and that produces a stream of exhaust gases, comprising:
passing ammonia from a source (32, 246) to an injector (90, 130, 150, 160, 250) and injecting at least components of the ammonia from said injector, into said stream of exhaust gases;
activating at least a portion of said ammonia to decompose at least part of it into ammonia components prior to injecting said ammonia into said stream of exhaust gases.

11. The method described in claim 10 wherein:
said step of activating includes positioning a body (90, 130, 150, 160) with passage walls forming at least one elongated passage, in said stream of exhaust gases and allowing the heat of said exhaust gases to heat said passage walls, and passing said ammonia through said at least one passage prior to injecting it into said stream of exhaust gases to allow said passage walls to heat said ammonia to at least 500°F.

12. The method described in claim 10 wherein:
said step of activating includes activating said ammonia to decompose more than 10% of the ammonia into NH₂ and NH and hydrogen, within 10 seconds of injecting ammonia into said stream of exhaust gases.

13. The method described in claim 10 wherein:
said step of activating includes heating said ammonia in the presence of a catalyst prior to said step of injecting.

14. The method described in claim 10 wherein:
said step of activating includes heating said ammonia to a temperature of at least 500°F in the presence of a catalyst before said step of injecting.

15. The engine according to claim 6 wherein said engine (12) has a fuel injector apparatus (60,172) positioned to inject hydrocarbon fuel into masses of air to combust them and produce work and to also produce a stream of exhaust gases that contain nitrogen oxides, with the engine having an exhaust conduit (16) through which said stream of exhaust gases flow before being emitted into the environment, and with said fuel injector apparatus including an electronic fuel injector circuit (172) that generates electrical currents (170) whose time durations at least partially-determine the average flow rate of fuel that is injected into said masses of air, wherein:
said injector apparatus {30) comprises an injector (96, 130, 150, 160) coupled to said exhaust conduit to inject ammonia into said stream of exhaust gases, and a control (180) that is coupled to said electronic fuel injector circuit and that controls operation of said injector apparatus to respectively increase and decrease the flow rate of ammonia injected by said injector into said exhaust conduit as the, average time durations of said electrical currents increase and decrease.

16. The engine according to claim 15 wherein:
said ammonia injection apparatus includes a source of pressured ammonia (32), an electrically operated valve (72), and walls forming an ammonia-carrying passageway (36) that extend from said source to said injector through said valve;
said control includes a divider circuit (200, 220, 210) that produces control signals (182) that are each of a duration that is a predetermined multiple of more than one of said electrical currents generated by said electronic fuel injector circuit, and an electrical conductor (74) that carries said control signals to said valve to open it for periods of time each equal to the duration of one of said control signals.

17. The method described in claim 10 wherein said step of passing ammonia to an injector includes controlling the injection of ammonia through an electrically operated valve (72) into an exhaust gas conduit of an engine (16), where said engine includes a fuel injector (66) and an electronic fuel injector circuit (172) that generates fuel injection control currents (170) whose average duration per unit of time determines the flow rate of fuel through said fuel injector, comprising:
using said fuel injection control currents (182) to control the opening of said valve (72) to flow ammonia through said valve at a flow rate that is generally proportioned to the duration per unit of time of said injection control currents.

## Revendications

1. Un appareil pour recevoir de l'ammoniac (78) et injecter au moins des éléments constitutifs de celui-ci dans un courant des gaz d'échappement (92) d'un moteur (12), le perfectionnement comprenant :
des moyens d'activation dudit ammoniac (130, 150, 164, 166, 232) afin de décomposer au moins une partie de celui-ci en éléments constitutifs de l'ammoniac avant l'injection dudit ammoniac activé dans ledit courant des gaz d'échappement.

2. L'appareil selon la revendication 1, dans lequel :
lesdits moyens d'activation sont réalisés pour décomposer au moins 10% de l'ammoniac en ses éléments constitutifs avant l'injection de l'ammoniac et de ses éléments constitutifs dans le courant des gaz d'échappement.

3. L'appareil selon la revendication 1, dans lequel :
lesdits moyens d'activation comprennent un tube dont une partie est placée dans ledit courant des gaz d'échappement et un corps (140, 150) comprenant une matière qui est catalysante vis-à-vis de l'ammoniac pour décomposer l'ammoniac, ledit corps étant placé dans ladite partie de tube, avec ledit corps qui présente de multiples passages d'ammoniac reliés en parallèle.

4. L'appareil selon la revendication 1, dans lequel :
lesdits moyens d'activation comprennent un corps (140, 150) présentant de multiples passages transporteurs d'ammoniac qui présentent chacun une section transversale inférieure à 1 mm², et un dispositif de chauffage électrique (146) couplé audit corps pour le chauffer.

5. L'appareil selon la revendication 1, dans lequel :
lesdits moyens d'activation comprennent un corps (150) de particules frittées formant des passages microscopiques, avec ledit corps qui est mis en place pour être chauffé par lesdits gaz d'échappement.

6. Un moteur (12) qui comprend des moyens de combustion (50, 64) pour brûler des hydrocarbures dans l'air afin de produire un travail, dans lequel lesdits moyens produisent également un courant de gaz d'échappement (92) qui contient des oxydes d'azote, avec le moteur qui présente un conduit d'échappement (16) à travers lequel les gaz d'échappement sont amenés à passer avant d'être émis dans l'atmosphère, le perfectionnement comprenant :
une source (32, 246) d'ammoniac ;
un appareil formant injecteur (30, 230) couplé à ladite source pour recevoir de celle-ci de l'ammoniac et l'injecter dans ledit conduit de gaz d'échappement ;
ledit appareil formant injecteur comprenant un conduit transporteur d'ammoniac (36) avec un injecteur (90, 130, 150, 160, 250) placé à l'intérieur dudit conduit d'échappement, ledit injecteur présentant au moins une ouverture de sortie (94, 136) à travers laquelle ledit ammoniac est injecté dans ledit courant de gaz d'échappement ;
des moyens de chauffage pour chauffer ledit ammoniac (130, 150) et l'amener à passer sur une matière catalysante (140) afin d'activer l'ammoniac et le décomposer au moins en partie en éléments constitutifs d'ammoniac après qu'il a quitté ladite source et avant qu'il ait été injecté dans ledit conduit d'échappement.

7. Le moteur décrit à la revendication 6, dans lequel :
lesdits moyens de chauffage comprennent un corps (140, 150) présentant une multiplicité de parties de passage, qui sont placées à l'intérieur dudit conduit d'échappement et qui présentent chacune une épaisseur qui n'est pas supérieure à 1 mm et une longueur qui n'est pas supérieure à dix fois son épaisseur moyenne, de sorte que ledit corps est chauffé par les gaz d'échappement et chauffe à son tour l'ammoniac qui se déplaçe à travers lesdites parties de passage afin d'activer ledit ammoniac.

8. Le moteur décrit à la revendication 6, dans lequel lesdits moyens de combustion comprennent une soupape d'injection de combustible (60) et un injecteur (130, 150, 160) mis en place pour injecter lesdits hydrocarbures dans ledit air afin de créer un mélange combustible-air prévu pour brûler, et un circuit formant injecteur électronique de combustible (17) qui produit des. courants électriques (170) dont les durées déterminent au moins partiellement la vitesse d'écoulement-moyenne du combustible qui est injecté dans ledit air, le perfectionnement comprenant :
un appareil d'injection d'ammoniac (30) qui comprend ledit injecteur et une commande (180) qui est couplée au circuit formant injecteur électronique de combustible et à ladite soupape, et qui commande le fonctionnement de ladite soupape pour augmenter et respectivement diminuer la vitesse d'écoulement de l'ammoniac injecté par ledit injecteur dans ledit conduit d'échappement lorsque la durée moyenne desdits courants électriques augmente et diminue.

9. Le moteur décrit à la revendication 6, dans lequel :
ledit injecteur comprend un corps (150) de particules frittées formant des passages microscopiques.

10. Un procédé de réduction des oxydes d'azote dans les gaz d'échappement d'un moteur qui brûle des hydrocarbures en présence d'air et qui produit un courant de gaz d'échappement, comprenant les étapes consistant à :
faire passer de l'ammoniac depuis une source (32, 246) jusqu'à un injecteur (90, 130, 150, 160, 250) et injecter au moins des éléments constitutifs de l'ammoniac issu dudit injecteur, dans ledit courant de gaz d'échappement ;
activer au moins une portion dudit ammoniac afin de le décomposer au moins en partie en éléments constitutifs de l'ammoniac avant d'injecter ledit ammoniac dans ledit courant de gaz d'échappement.

11. Le procédé décrit à la revendication 10, dans lequel :
ladite étape d'activation comprend la mise en place d'un corps (90, 130, 150, 160), présentant des parois de passage formant au moins un passage allongé, dans ledit courant de gaz d'échappement, et le fait de laisser la chaleur desdits gaz d'échappement chauffer lesdites parois de passage et faire passer ledit ammoniac à travers cet au moins un passage avant de l'injecter dans ledit courant de gaz d'échappement pour permettre aux parois de passage de chauffer ledit ammoniac à au moins 500°F.

12. Le procédé décrit à la revendication 10, dans lequel :
ladite étape d'activation comprend le fait d'activer ledit ammoniac pour décomposer plus de 10% de l'ammoniac en NH₂, NH et hydrogène, dans un intervalle de 10 secondes d'injection d'ammoniac dans ledit courant de gaz d'échappement.

13. Le procédé décrit à la revendication 10, dans lequel :
ladite étape d'activation comprend le chauffage dudit ammoniac en présence d'un catalyseur avant ladite étape d'injection.

14. Le procédé décrit à la revendication 10, dans lequel :
ladite étape d'activation comprend le chauffage dudit ammoniac à une température d'au moins 500°F en présence d'un catalyseur avant ladite étape d'injection.

15. Le moteur selon la revendication 6, dans lequel ledit moteur (12) comprend un appareil d'injection de combustible (60, 172) mis en place pour injecter un combustible hydrocarboné dans des masses d'air pour le brûler et produire du travail et produire également un courant de gaz d'échappement qui contient des oxydes d'azote, avec le moteur qui présente un conduit d'échappement (16) à travers lequel ledit courant de gaz d'échappement passe avant d'être émis dans l'environnement, et avec ledit appareil d'injection de combustible qui comprend un circuit d'injection électronique de combustible (172) produisant des courants électriques (170) dont les durées déterminent au moins partiellement la vitesse d'écoulement moyenne du combustible qui est injecté dans lesdites masses d'air, dans lequel :
ledit appareil d'injection (30) comprend un injecteur (96, 130, 150, 160) couplé audit conduit d'échappement pour injecter de l'ammoniac dans ledit courant de gaz d'échappement, et une commande (180) qui est couplée audit circuit d'injection électronique de combustible et qui commande le fonctionnement dudit appareil d'injection afin d'augmenter et respectivement diminuer la vitesse d'écoulement de l'ammoniac injecté par ledit injecteur dans ledit conduit d'injection lorsque la durée moyenne desdits courants électriques augmente et diminue.

16. Le moteur selon la revendication 15, dans lequel :
ledit appareil d'injection d'ammoniac comprend une source d'ammoniac sous pression (32), une soupape actionnée électriquement (72) et des parois formant un passage tansporteur d'ammoniac (36) qui s'étend depuis ladite source jusqu'audit injecteur à travers ladite soupape ;
ladite commande comprend une circuit diviseur (200, 220, 210) qui produit des signaux de commande (182) qui sont chacun d'une durée qui est un multiple prédéterminé de plus d'un desdits courants électriques produits par ledit circuit d'injection électronique de combustible, et un conducteur électrique (74) qui transporte lesdits signaux de commande vers ladite soupape pour l'ouvrir pendant des périodes de temps égales chacune à la durée d'un desdits signaux de commande.

17. Le procédé décrit à la revendication 10, dans lequel ladite étape consistant à faire passer de l'ammoniac vers un injecteur comprend la commande de l'injection de l'ammoniac à travers une soupape actionnée électriquement (72) dans un conduit de gaz d'échappement d'un moteur (16), où ledit moteur comprend une injection de combustible (66) et un circuit d'injection électronique de combustible (172) qui produit des courants de commande d'injection de combustible (170) dont la durée moyenne par unité de temps détermine la vitesse d'écoulement du combustible à travers ledit injecteur de combustible, comprenant :
l'utilisation desdits courants de commande d'injection de combustible (182) pour commander l'ouverture de ladite soupape (72) afin de faire passer l'ammoniac à travers ladite soupape à une vitesse d'écoulement qui est de manière générale proportionnelle à la durée par unité de temps desdits courants de commande d'injection.

## Patentansprüche

1. Vorrichtung zur Aufnahme von Ammoniak (78) und zum Einspritzen zumindest Komponenten davon in einen Strom von Abgasen (92) eines Motors (12), wobei die Verbesserung umfasst:
Mittel zum Aktivieren des Ammoniaks (130, 150, 164, 166, 232), um zumindest einen Teil davon in Ammoniak-Komponenten aufzuspalten, bevor das aktivierte Ammoniak in den Strom von Abgasen eingespritzt wird.

2. Vorrichtung nach Anspruch 1, worin:
das Mittel zum Aktivieren so konstruiert ist, dass zumindest 10 % des Ammoniaks in seine Komponenten aufgespalten werden, bevor das Ammoniak und seine Komponenten in den Strom von Abgasen eingespritzt werden.

3. Vorrichtung nach Anspruch 1, worin:
das Mittel zum Aktivieren ein Rohr, von dem ein Abschnitt im Strom von Abgasen liegt, sowie einen Körper (140, 150) umfasst, der Material umfasst, das Ammoniak katalysiert, um Ammoniak aufzuspalten, wobei der Körper im Rohrabschnitt liegt, wobei der Körper mehrere Ammoniak-Durchgänge aufweist, die parallel geschaltet sind.

4. Vorrichtung nach Anspruch 1, worin:
das Mittel zum Aktivieren einen Körper (140, 150), der mehrere Ammoniak führende Durchgänge aufweist, die jeweils einen Querschnitt von weniger als 1 mm² aufweisen, sowie eine mit Elektrizität betriebene Heizeinrichtung (146) umfasst, die an den Körper gekoppelt ist, um ihn zu erhitzen.

5. Vorrichtung nach Anspruch 1, worin:
das Mittel zum Aktivieren einen Körper (150) aus gesinterten Teilchen umfasst, die mikroskopische Durchgänge bilden, wobei der Körper so angeordnet ist, das er von den Abgasen erhitzt wird.

6. Motor (12), der Mittel (50, 64) zum Verbrennen von Kohlenwasserstoffen in Luft umfasst, um Arbeit zu erzeugen, worin das Mittel auch einen Strom von Abgasen (92) erzeugt, die Stickstoffoxide enthalten, wobei der Motor eine Auspuffleitung (16) aufweist, durch die die Abgase hindurchgeführt werden, bevor sie an die Atmosphäre abgegeben werden, wobei die Verbesserung umfasst:
eine Ammoniakquelle (32, 246);
eine Einspritzvorrichtung (30, 230), die an die Quelle gekoppelt ist, um Ammoniak davon zu erhalten und es in die Abgasleitung einzuspritzen;
wobei die Einspritzvorrichtung eine Ammoniak führende Leitung (36) mit einem Injektor (90, 130, 150, 160, 250) umfasst, der innerhalb der Abgasleitung liegt, wobei der Injektor zumindest eine Auslassöffnung (94, 136) aufweist, durch die das Ammoniak in den Strom von Abgasen eingespritzt wird;
Mittel (130, 150), um das Ammoniak zu erhitzen und es an einem Katalysatormaterial (140) vorbei strömen zu lassen, um das Ammoniak zu aktivieren, um zumindest einen Teil davon in Ammoniak-Komponenten aufzuspalten, nachdem es die Quelle verlassen hat und bevor es in die Abgasleitung eingespritzt worden ist.

7. Motor nach Anspruch 6, worin:
das Mittel zum Erhitzen einen Körper (140, 150) umfasst, der eine Vielzahl von Durchgangsabschnitten aufweist, die innerhalb der Abgasleitung liegen und die jeweils eine Dicke von nicht mehr als 1 mm und eine Länge aufweisen, die mehr als das Zehnfache ihrer mittleren Dicke beträgt, so dass der Körper von Abgasen erhitzt wird und seinerseits Ammoniak erhitzt, das durch den Durchgangsabschnitt hindurchgeht, um das Ammoniak zu aktivieren.

8. Motor nach Anspruch 6, worin das Mittel zum Verbrennen ein Treibstoffinjektorventil (60) und einen Injektor (130, 150, 160), der so angeordnet ist, dass er die Kohlenwasserstoffe in die Luft einspritzt, um ein Treibstoff-Luft-Gemisch zur Verbrennung zu erzeugen, sowie eine elektronische Treibstoffinjektorschaltung (17) umfasst, die elektrische Ströme (170) erzeugt, deren Zeitdauer zumindest teilweise die mittlere Strömungsrate von Brennstoff bestimmt, der in die Luft einspritzt wird, wobei die Verbesserung umfasst:
eine Ammoniakeinspritzvorrichtung (30), die den Injektor und einen Regler (180) umfasst, der an die elektronische Treibstoffinjektorschaltung und an das Ventil angeschlossen ist und den Betrieb des Ventils steuert, um die Strömungsrate von Ammoniak, das durch den Injektor in die Abgasleitung eingespritzt wird, mit der Zunahme und Abnahme der mittleren Zeitdauer der elektrischen Ströme zu erhöhen bzw. zu verringern.

9. Motor nach Anspruch 6, worin:
der Injektor einen Körper (150) aus gesinterten Teilchen umfasst, die mikroskopische Durchgänge bilden.

10. Verfahren zur Reduktion von Stickstoffoxiden in den Abgasen eines Motors, der Kohlenwasserstoff in Gegenwart von Luft verbrennt und der einen Strom von Abgasen erzeugt, umfassend:
das Leiten von Ammoniak von einer Quelle (32, 246) zu einem Injektor (90, 130, 150, 160, 250) und das Einspritzen zumindest von Komponenten des Ammoniak aus dem Injektor in den Strom von Abgasen;
das Aktivieren zumindest eines Teils des Ammoniaks, um zumindest einen Teil davon in Ammoniak-Komponenten aufzuspalten, vor dem Einspritzen des Ammoniaks in den Strom von Abgasen.

11. Verfahren nach Anspruch 10, worin:
der Schritt des Aktivierens das Anordnen eines Körpers (90, 130, 150, 160) mit Durchgangswänden, die zumindest einen länglichen Durchgang bilden, im Strom von Abgasen und das Erhitzen der Durchgangswände durch die Wärme der Abgase, sowie das Hindurchleiten des Ammoniaks durch den zumindest einen Durchgang umfasst, bevor es in den Strom von Abgasen eingespritzt wird, um zu ermöglichen, dass die Durchgangswände das Ammoniak auf zumindest 500 °F erhitzt werden.

12. Verfahren nach Anspruch 10, worin:
der Schritt des Aktivierens das Aktiveren des Ammoniaks, um mehr als 10 % des Ammoniaks in NH₂ und NH und Wasserstoff aufzuspalten, innerhalb von 10 s nach dem Einspritzen von Ammoniak in den Strom von Abgasen umfasst.

13. Verfahren nach Anspruch 10, worin:
der Schritt des Aktivierens das Erhitzen des Ammoniaks in Gegenwart eines Katalysators vor dem Schritt des Einspritzens umfasst.

14. Verfahren nach Anspruch 10, worin:
der Schritt des Aktivierens das Erhitzen des Ammoniaks auf eine Temperatur von zumindest 500 °F in Gegenwart eines Katalysators vor dem Schritt des Einspritzens umfasst.

15. Motor nach Anspruch 6, worin der Motor (12) eine Treibstoffinjektorvorrichtung (60, 172) aufweist, die so angeordnet ist, dass Kohlenwasserstoff-Treibstoff in Luftmassen eingespritzt wird, um sie zu verbrennen und Arbeit zu erzeugen und auch einen Strom von Abgasen zu erzeugen, die Stickstoffoxide enthalten, wobei der Motor eine Auspuffleitung (16) aufweist, durch die der Strom von Abgasen strömt, bevor er an die Umgebung abgegeben wird, und wobei die Treibstoffinjektorvorrichtung eine elektronische Treibstoffinjektorschaltung (172) umfasst, die elektrische Ströme (170) erzeugt, deren Zeitdauer zumindest teilweise die mittlere Strömungsrate von Treibstoff bestimmt, der in die Luftmassen eingespritzt wird, worin:
die Injektorvorrichtung (30) einen Injektor (96, 130, 150, 160), der an die Abgasleitung gekoppelt ist, um Ammoniak in den Strom von Abgasen einzuspritzen, sowie eine Steuerung (180) umfasst, die an die elektronische Treibstoffinjektorschaltung gekoppelt ist und den Betrieb der Injektorvorrichtung steuert, um die Strömungsrate von Ammoniak, das vom Injektor in die Abgasleitung eingespritzt wird, mit Zunahme und Abnahme der mittleren Zeitdauer der elektrischen Ströme zu erhöhen bzw. zu verringern.

16. Motor nach Anspruch 15, worin:
die Ammoniak-Einspritzvorrichtung eine Quelle für unter Druck stehendes Ammoniak (32), ein elektrisch betätigtes Ventil (72) sowie Wände umfasst, die einen Ammoniak führenden Durchgang (36) bilden, der sich durch das Ventil hindurch von der Quelle zum Injektor erstreckt;
wobei die Steuerung eine Teilerschaltung (200, 220, 210), die Steuersignale (182) erzeugt, die jeweils eine Dauer haben, die ein vorbestimmtes Vielfaches von mehr als einem der elektrischen Ströme ist, die von der elektronischen Treibstoffinjektorschaltung erzeugt werden, sowie einen elektrischen Leiter (74) umfasst, der die Steuersignale zum Ventil leitet, um es für Zeiträume zu öffnen, die der Dauer eines der Steuersignale entsprechen.

17. Verfahren nach Anspruch 10, worin der Schritt des Leitens von Ammoniak zu einem Injektor das Steuern der Einspritzung von Ammoniak durch ein elektrisch betätigtes Ventil (72) in eine Abgasleitung eines Motors (16) umfasst, wobei der Motor einen Treibstoffinjektor (66) und eine elektronische Treibstoffinjektorschaltung (172) umfasst, die Treibstoffeinspritz-Steuerströme (170) erzeugt, deren mittlere Dauer pro Zeiteinheit die Strömungsrate von Treibstoff durch den Treibstoffinjektor bestimmt, umfassend:
die Verwendung der Treibstoffeinspritz-Steuerströme (182), um das Öffnen des Ventils (72) zu steuern, um Ammoniak mit einer Strömungsrate durch das Ventil strömen zu lassen, die im Allgemeinen proportional zur Dauer pro Zeiteinheit der Einspritzsteuerströme ist.
